# EUROPEAN PATENT SPECIFICATION

(11) **EP 3 804 654 B1**
(45) Date of publication and mention of the grant of the patent: **26.07.2023**
(21) Application number: 19202011.3
(22) Date of filing: 08.10.2019
(51) Int. Cl.: A61C 5/77, A61C 13/00, B23Q 3/16, B23C 3/16, B23Q 15/00, G05B 19/4093

(54) **METHOD OF MACHINING A DENTAL BLOCK FOR MANUFACTURING A DENTAL RESTORATION**
VERFAHREN ZUR BEARBEITUNG EINES ZAHNBLOCKS ZUR HERSTELLUNG EINES ZAHNERSATZES
PROCÉDÉ D'USINAGE D'UN BLOC DENTAIRE POUR LA FABRICATION D'UNE RESTAURATION DENTAIRE

(43) Date of publication of application: 14.04.2021
(73) Proprietor: DENTSPLY SIRONA Inc., York, PA 17401 (US); Sirona Dental Systems GmbH, 64625 Bensheim (DE)
(72) Inventor: Basler, Franz, 64625 Bensheim (DE); Nowarra, Oliver, 64625 Bensheim (DE); Weiß, Daniel, 64625 Bensheim (DE)
(74) Representative: Özer, Alpdeniz

(56) References cited:
- EP-A1- 3 476 363
- US-A1- 2018 360 576
- US-B2- 6 953 383

## Description

### TECHNICAL FIELD OF THE INVENTION

The present invention relates to a method of machining a dental block for manufacturing a dental restoration. The present invention more particularly relates to a dental machining system for machining a dental block.

### BACKGROUND ART OF THE INVENTION

In general, a dental machining system has a dental tool machine for machining a dental block which is typically made from ceramic. The dental tool machine generally comprises: one or more carriage units each movably holding at least one dental tool for machining a corresponding side of the dental block; a holding unit for holding the dental block relatively movably with respect to the dental tools; and a control unit for controlling the units. Generally, a CAD/CAM software is used to digitally construct a dental restoration and to provide the corresponding machining data to the dental tool machine. The CAD/CAM software is usually run on a processing unit such as a PC in the dental machining system. During the manufacturing of the dental restoration, the dental block is generally machined by using at least one dental tool to finish or pre-finish the dental restoration completely along the equator with a holding stub. Thereafter the upper and lower surfaces of the dental restoration are finished or pre-finished.

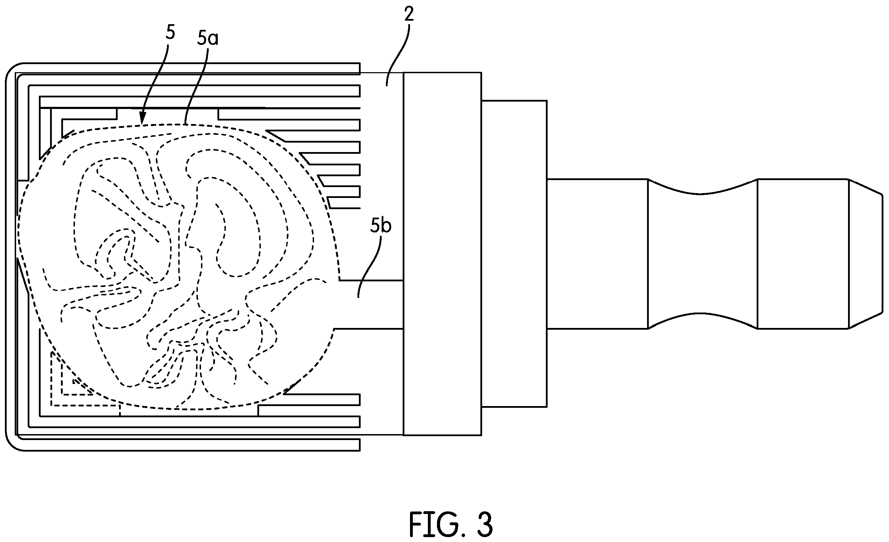

Fig. 3 shows a commonly used machining path (i.e., the meandering line) known from the prior art for machining the equator (5a) of a dental restoration (5) from a dental block (2). The dashed lines inside the dental block (2) illustrate the dental restoration (5). The dental restoration (5) is connected to the rest of the block dental block (2) through a holding stub (5b). According to the prior art machining method illustrated in Fig. 3, the material is machined starting from the outside of the dental block (2) up to the dental restoration (5) with a low lateral infeed (typically 0.05mm). In general, the machining time depends on the dental block size and dental restoration size. The machining time for a molar crown from a C14 dental block is approximately 10 minutes.

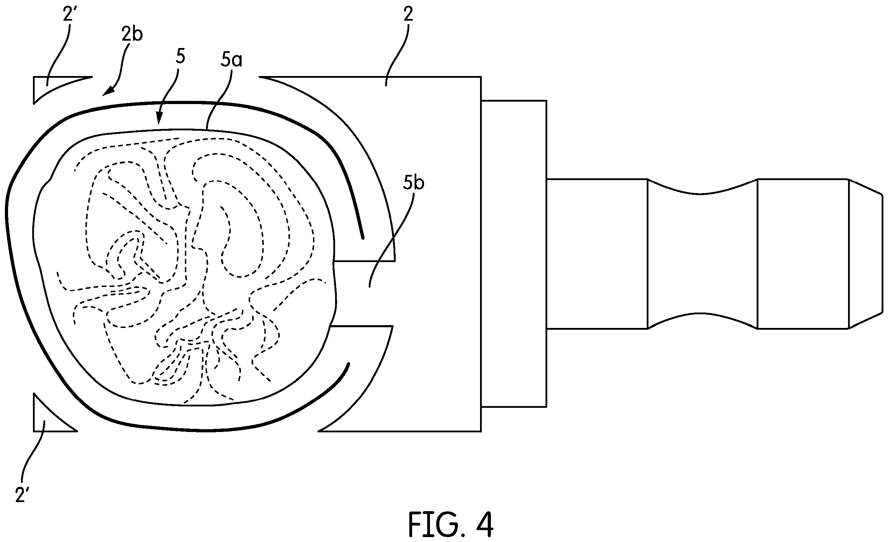

Fig. 4 shows another commonly used machining path (i.e., the bold line) known from the prior art for machining the equator (5a) of the dental restoration (5) from the dental block (2). According to the prior art machining method illustrated in Fig. 4, a channel (2b) is machined around the equator (5a) of the dental restoration (5) to cut out the rest of the dental block (2) from the dental restoration (5). The unmachined pieces (2') of the dental block (2) drop down. Through this alternative prior art machining method, the machining time can be comparatively reduced. However, the unmachined pieces (2') pose a risk of damaging the dental restoration (5) during the machining. Such a machining method is disclosed in EP3199124B1. Reference is also made to EP 3476363 A1

All the above-mentioned prior art machining methods can be performed in the practice of a dental professional during the presence of the patient. Therefore, the overall time spend for manufacturing the dental restoration is a critical factor. Long waiting periods are uncomfortable for the patients and increase the manufacturing costs.

### DISCLOSURE OF THE INVENTION

An objective of the present invention is to overcome the disadvantages of the prior art and provide a method of machining a dental block by using at least one dental tool to finish or pre-finish a dental restoration at least completely along the equator, with or without a holding stub.

This objective has been achieved through the machining method as defined in claim 1, a computer-program according to claim 8, a computer-readable storage according to claim 9 and the dental machining system as defined in claim 10. The subject-matters of the dependent claims relate to further developments.

The present invention provides a method of machining a dental block by using at least one dental tool to finish or pre-finish a dental restoration at least completely along the equator, with or without a holding stub. The method comprises a step of moving the axis of the dental tool along a path with an overlaid lateral motion having an amplitude, and without separating an unmachined piece from the rest of the dental block, wherein the path lies away from the equator at least by an amount equal to half of the diameter of the dental tool plus half of the amplitude of the overlaid lateral motion.

A major advantageous effect of the present invention is that the machining time can be comparatively shortened. Thereby, the manufacturing costs can be reduced. Another major advantageous effect of the present invention is that the life time of the dental tool can be prolonged, and thus the dental restoration can be finished or pre-finished with a comparatively higher quality. Another major advantageous effect of the present invention is that the risk of damaging the dental restoration and/or the dental tool can be avoided or reduced as much as possible.

According to the present invention, the machining of the dental block may be carried out either in a single machining step or in multiple machining steps to finish or pre-finish the dental restoration at least completely around the equator, with or without a holding stub.

According to an embodiment of the present invention, the dental tool is moved at most one revolution around the equator of the dental restoration during the single machining step. During the revolution, the amplitude of the overlaid lateral motion is varied along the path according to the shape and size of the dental restoration to machine the entire rest of the dental block around the equator of the dental restoration and, thereby, to completely remove the rest of the dental block preferably except the holding stub in the single machining step. Thereby, the formation of any channel in the rest of the dental block and the separation of any unmachined piece from the rest of the dental block can be prevented. Thereby, the machining time can be significantly reduced and the risk of damaging the dental restoration can be avoided or reduced as much as possible.

According to another embodiment of the present invention, the dental tool is moved more than one revolution around the equator of the dental restoration during the multiple machining steps. During the revolutions, the amplitude of the overlaid lateral motion may be kept constant or varied along the path according to the shape and size of the dental restoration to machine, in each machining step, at least part of the rest of the dental block around the equator of the dental restoration and, thereby, to remove the rest of the dental block preferably except the holding stub successively in multiple machining steps. Thereby, the formation of a channel in the rest of the dental block and the separation of any unmachined piece from the rest of the dental block can be prevented. The number of the machining steps, namely the number of revolutions may be determined based on the desired machining time and the target geometry of the dental restoration. The number of revolutions may be an integer number or a fractional number. Thereby, the machining time can be further reduced and the risk of damaging the dental restoration can be avoided or reduced as much as possible.

According to the present invention, the shape of the dental tool path is determined by the movement of the central position of the dental tool axis and the amplitude of the overlaid motion of the dental tool axis. The central position of the dental tool axis preferably follows the shape of the equator of the dental restoration or the shape of the dental block. The amplitude of the overlaid lateral motion that machines at least part of the rest of the dental block in the lateral direction with respect to the equator can be kept constant or varied such that the path has an oscillating shape, preferably a trochoidale shape. The longitudinal speed of the central position of the dental tool axis may be substantially constant or variable to vary the shape of the path. The transverse speed of the lateral movement may also be substantially constant or variable to vary the shape of the path.

According to the present invention, the machining method can be carried out by a single-spindle dental tool machine or alternatively by a multi-spindle dental tool machine, preferably by a double-spindle dental tool machine. Thereby the dental block can be simultaneously machined from at least two different sides, preferably opposite sides. According to an embodiment of the present invention, the double-spindle dental tool machine has at least two dental tools for machining the dental block. The axes of the two dental tools are aligned parallelly in opposite direction and moved either simultaneously or sequentially along the corresponding paths to finish or pre-finish the dental restoration at least completely along the equator, with or without a holding stub.

According to the present invention, the dental block is preferably machined with the lateral surface of a dental tool along the equator. The length of the dental tool and the size of the dental block may vary. In an embodiment of the present invention, the axis of the dental tool is penetrated through the entire dental block. Alternatively, the axis of the dental tool is penetrated only in a part of the dental block. The dental block can be machined sequentially or simultaneously from two different sides by two different dental tools. Alternatively, the dental block can be rotated relative to the dental tool, and thus can be machined also from the other side by the same dental tool.

According to the present invention, various dental tools suitable for machining the dental block may be used. The dental tool may be a cylindrical shaped tool with or without a corner radius, a spherical shaped tool, a torical shaped tool, a conical shaped tool, a milling tool with defined cutting edges, or a grinding tool with undefined cutting edges or a tool having a combined shape of one or more of the preceding tools.

According to the present invention, the dental block may be produced from various materials and in various sizes suitable for manufacturing one or more dental restorations. The dental block may be made of ceramic, pre-sintered ceramic, metal, pre-sintered metal, plastic, or a composite.

The present invention also provides a computer-program such as a CAD/CAM software comprising computer-executable codes for causing a computer-based dental machining system to carry out the method steps of the present invention. The present invention also provides a computer-readable data storage which stores the computer-program. The data storage may be internal or external to the dental machining system.

The present invention also provides a computer-based dental machining system having a single-spindle dental tool machine, or preferably a multi-spindle dental tool machine, more preferably a double-spindle dental tool machine. For instance, the double-spindle dental tool machine may have two tool spindles each having three degrees of freedom or alternatively two degrees of freedom with a kinematic axis coupling for the relatively movable dental blank. According to an embodiment, the dental machining system comprises a double-spindle dental tool machine which comprises: one or more carriage units each movably holding at least one dental tool for machining a corresponding side of the dental block; a holding unit for holding at least one dental block relatively movably with respect to the dental tools; and a control unit adapted to individually control drive of the carriage units and the holding unit according to the machining method of the present invention. The path of each dental tool is determined by the computer program such as the CAD/CAM software run on a processing unit or a PC in the dental machining system according to the machining method of the present invention.

### BRIEF DESCRIPTION OF THE DRAWINGS

In the subsequent description, further aspects and advantageous effects of the present invention will be described in more detail by using exemplary embodiments and by reference to the drawings, wherein
Fig. 1 - is a dental block according to an embodiment of the present invention, wherein the dashed lines show a dental restoration to be machined from the dental block with the dental tool machine in Fig. 9;
Fig. 2 - is the dental restoration machined from the dental block of Fig. 1 through a method according to an embodiment of the present invention;
Fig. 3 - is a schematic view of a machining path ( i.e., the meandering line) according to the prior art for machining the equator of a dental restoration (dashed lines) from a dental block;
Fig. 4 - is a schematic view of another machining path (i.e., the bold line) according to the prior art for machining the equator of a dental restoration (dashed lines) from a dental block;
Fig. 5 - is a schematic view of a machining method according to a first embodiment of the present invention for machining the dental block along the equator of the dental restoration (dashed lines) in a single machining step, wherein the arrows show the varying amplitude of the overlaid lateral motion of the dental tool axis;
Fig. 6 to Fig. 8 - are schematic views of another machining method according to a second embodiment of the present invention for machining the dental block along the equator of the dental restoration (dashed lines) in two machining steps, wherein the arrows show the substantially constant amplitude of the overlaid lateral motion of the dental tool axis;
Fig. 9 - is a partial perspective view of a dental machining system according to an embodiment of the present invention for machining the dental block of Fig. 1.

The reference numbers shown in the drawings denote the elements as listed below and will be referred to in the subsequent description of the exemplary embodiments:
1. Dental tool machine
2. Dental block
   2' Corner piece
   2a. Shaft
   2b. Channel
3. Carriage unit
   3a. Arm
   3b. Shaft
4. Dental tool
   4a. Axis
5. Dental restoration
   5a. Equator
   5b. Stub
6. Path

### A: Amplitude of the overlaid lateral motion

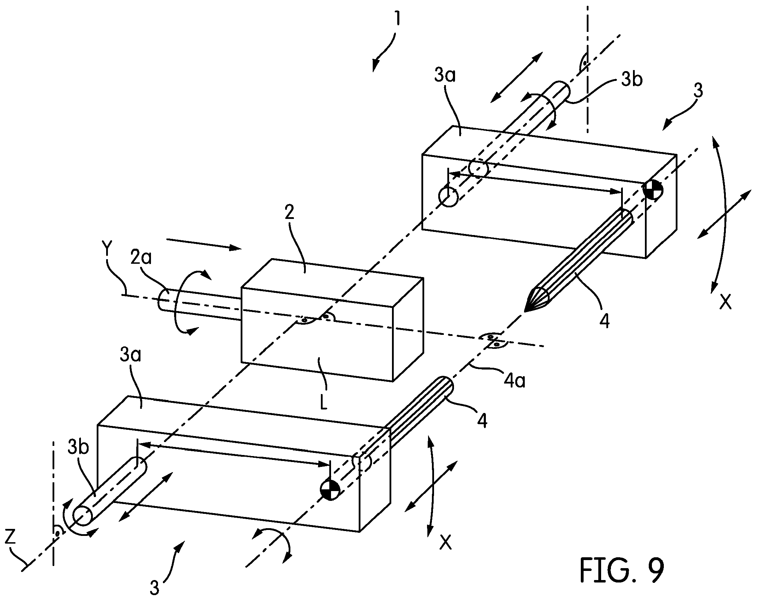

Fig. 9 illustrates part of a dental machining system according to an embodiment of the present invention. The dental machining system has a double-spindle dental tool machine (1). The dental tool machine (1) has two carriage units (3) each movably holding a dental tool (4) for machining a corresponding side of the dental block (2); a holding unit (not shown) for holding a dental block (2) relatively movably with respect to the dental tools (4); and a control unit adapted to individually control drive of the carriage units (3) and the holding unit according to the machining method of the present invention. The machining method will be described later in the subsequent description. Each carriage unit (3) has an arm (3a) which is connected to a respective shaft (3b). Each shaft (3b) can be rotated around the z-axis and translated along the z-axis by means of a respective driving mechanism (not shown) of the carriage unit (3). The axes (4a) of the two dental tools (4) are aligned parallelly in opposite directions (z). Each dental tool (4) is mountable to a respective tool motor (not shown) in the respective arm (3a). The dental tool (4) may be one of a cylindrical shaped tool (4) with or without a corner radius, a spherical shaped tool (4), a torical shaped tool (4), a conical shaped tool (4), a milling tool (4) with defined cutting edges, or a grinding tool (4) with undefined cutting edges or a tool (4) having a combined shape of one or more of the preceding tools (4). The dental block (2) is connected via the holding unit to a shaft (2a). The dental block (2) may be made of a material which includes ceramic, pre-sintered ceramic, metal, pre-sintered metal, plastic, or a composite. The shaft (2a) for the dental block (2) can be rotated around the y-axis and translated along the y-axis by means of a respective driving mechanism (not shown).

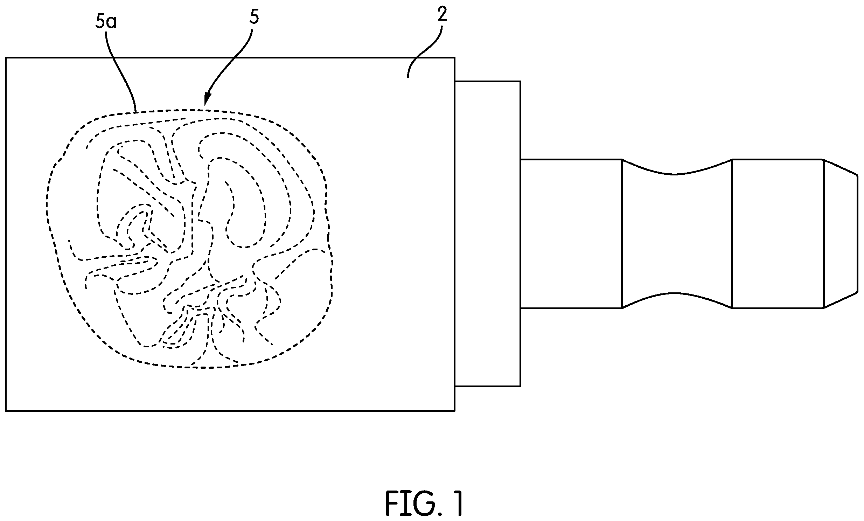

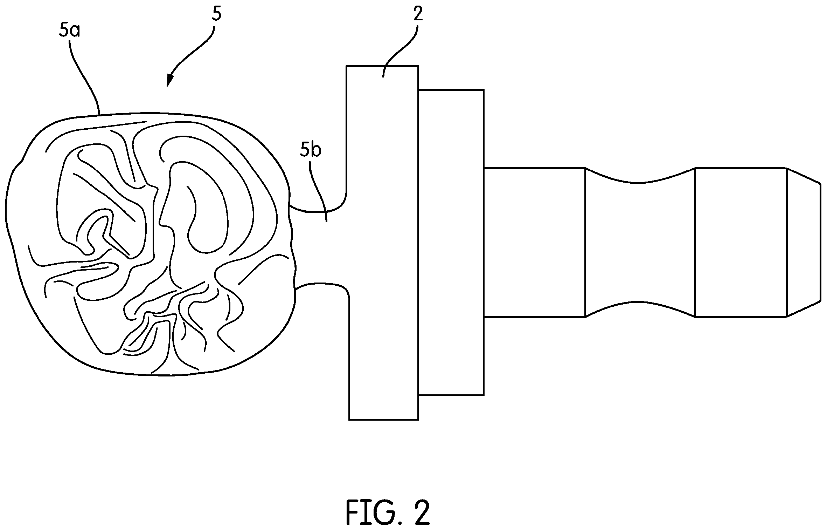

Fig. 1 shows an enlarged view of a dental block (2) according to an embodiment of the present invention. The dental block (2) may be rectangular shaped or alternatively round shaped. The dashed lines in Fig. 1, illustrate a dental restoration (5) to be machined from the dental block (2) with the dental tool machine (1) in Fig. 9. Fig. 2 shows the enlarged view of the dental restoration (5) machined from the dental block (2) in Fig. 1 through the machining method according to an embodiment of the present invention. In the method of machining the dental block (2), at least one dental tool (4) is used to finish or pre-finish the dental restoration (5), at least completely along the equator (Sa), with or without a holding stub (5b).

According to the present invention, the machining of the dental block (2) may be carried out either in a single machining step or in multiple machining steps to finish or pre-finish the dental restoration (5) at least completely around the equator (Sa), with or without a holding stub (5b).

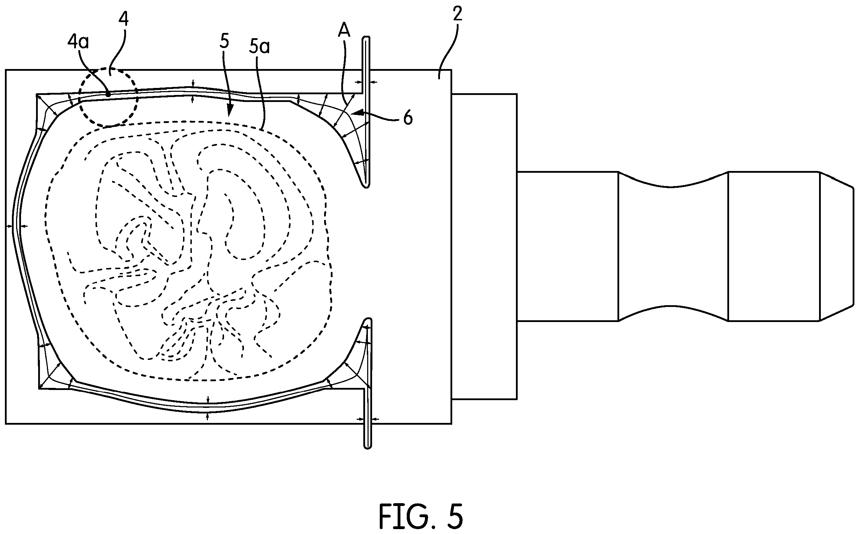

Fig. 5 illustrates the machining method according to a first embodiment of the present invention in which a single machining step is carried out. As shown in Fig. 5, the axis (4a) of the dental tool (4) is moved along a path (6) with an overlaid lateral motion having an amplitude (A), and without separating an unmachined piece (2') from the rest of the dental block (2). The path (6) lies away from the equator (5a) by an amount equal to half of the diameter of the dental tool (4) plus half of the amplitude (A) of the overlaid lateral motion. The amplitude (A) is varied along the path (6) such that the rest of the dental block (2) around the equator (5a) of the dental restoration (5) is completely removed except for the holding stub (5b). Fig. 2 shows the dental block (2) after the single machining step is completed.

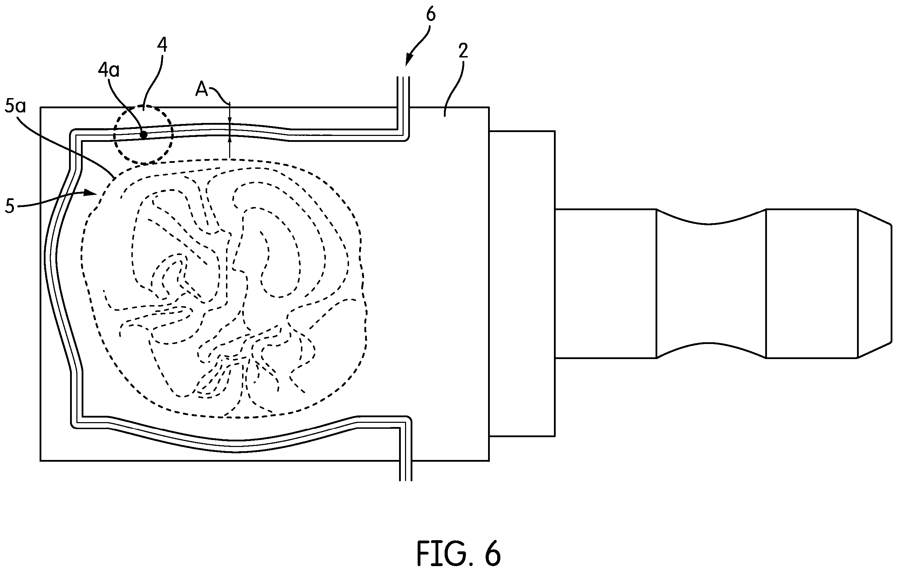

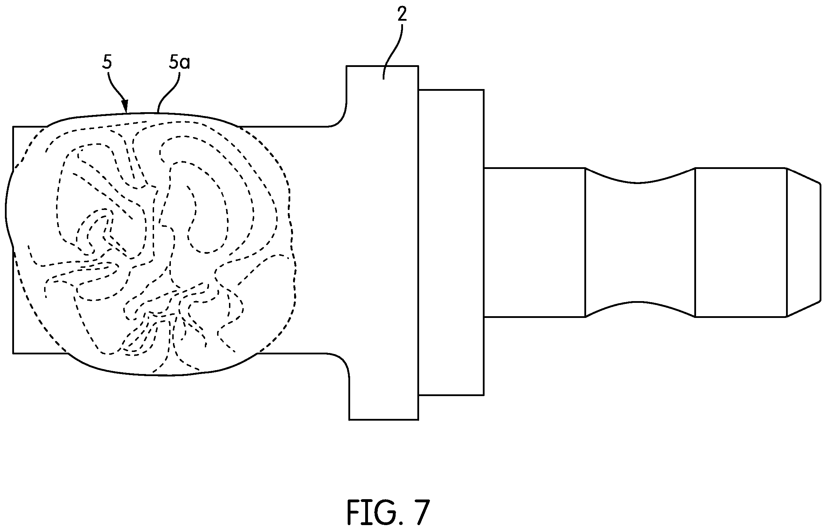

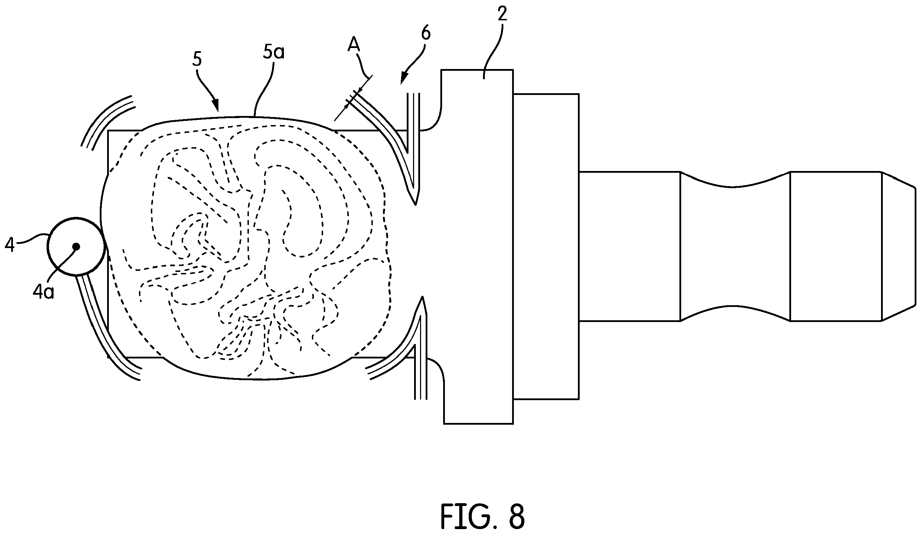

For ease of description, the multi-step machining will be explained for the case where two machining steps are carried out sequentially. Fig. 6 to Fig. 8 illustrate the machining method according to a second embodiment of the present invention in which two machining steps are sequentially carried out. Fig. 6 shows the first machining step. As shown in Fig. 6, the axis (4a) of the dental tool (4) is moved along a path (6) with an overlaid lateral motion having an amplitude (A), without separating an unmachined piece (2') from the rest of the dental block (2). The path (6) lies away from the equator (5a) at least by an amount equal to half of the diameter of the dental tool (4) plus half of the amplitude (A) of the overlaid lateral motion. The amplitude (A) is kept substantially constant along the path (6). Fig. 7 shows the dental block (2) after the first machining step is completed. As shown in Fig. 7, the rest of the dental block (2) around the equator (5a) of the dental restoration (5) is completely removed only in three sections of the dental block (2). Fig. 8 shows the second machining step. As shown in Fig. 8, the axis (4a) of the dental tool (4) is moved along a path (6) with the same overlaid lateral motion having the amplitude (A), without separating an unmachined piece (2') from the rest of the dental block (2). The path (6) lies away from the equator (5a) at least by an amount equal to half of the diameter of the dental tool (4) plus half of the amplitude (A) of the overlaid lateral motion. The amplitude (A) is kept substantially constant along the path (6). Fig. 2 shows the dental block (2) after the second machining step is completed. As shwon in Fig. 2, after the second machining step, the rest of the dental block (2) around the equator (5a) of the dental restoration (5) becomes completely removed except for the holding stub (5b).

## Claims

1. A computer-implemented method of machining a dental block (2) by using at least one dental tool (4) to finish or pre-finish a dental restoration (5) at least completely along the equator (Sa), with or without a holding stub (5b), the method comprising:
a step of moving the axis (4a) of the dental tool (4) along a path (6) with an overlaid lateral motion having an amplitude (A), and without separating an unmachined piece (2') from the rest of the dental block (2), wherein the path (6) lies away from the equator (5a) at least by an amount equal to half of the diameter of the dental tool (4) plus half of the amplitude (A) of the overlaid lateral motion, wherein the amplitude (A) of the overlaid lateral motion is varied along the path (6), wherein the path (6) has a trochoidal shape.

2. The method according to claim 1, **characterized in that** the dental tool (4) is moved at most one revolution around the equator (5a) to finish or pre-finish the dental restoration (5) at least completely along the equator (Sa), with or without a holding stub (5b).

3. The method according to claim 1, **characterized in that** the dental tool (4) is moved more than one revolution around the equator (5a) to finish or pre-finish the dental restoration (5) at least completely along the equator (Sa), with or without a holding stub (5b).

4. The method according to any one claims 1 to 3, **characterized in that** two dental tools (4) are used for machining the dental block (2), wherein the axes (4a) of the two dental tools (4) are aligned parallelly in opposite direction (z) and moved either simultaneously or sequentially along the corresponding paths (6) to finish or pre-finish the dental restoration (5) at least completely along the equator (5a), with or without a holding stub (5b).

5. The method according to any one the claims 1 to 4, **characterized in that** the lateral surface of at least one dental tool (4) is used for machining the dental block (2), wherein the axis (4a) of the dental tool (4) is penetrated through the entire dental block (2) or only in a part of the dental block (2).

6. The method according to any one claims 1 to 5, **characterized in that** each dental tool (4) is one of a cylindrical shaped tool with or without a corner radius, a spherical shaped tool, a torical shaped tool, a conical shaped tool, a milling tool with defined cutting edges, or a grinding tool with undefined cutting edges or a tool having a combined shape of one or more of the preceding tools.

7. The method according to any one claims 1 to 6, **characterized in that** the dental block (2) is made of a material comprising ceramic, pre-sintered ceramic, metal, pre-sintered metal, plastic, and/or a composite.

8. A computer-program comprising computer-readable codes for causing a computer-based dental machining system (1) to execute the method steps according to any one of claims 1 to 7.

9. A computer-readable storage which stores the computer-program according to claim 8.

10. A dental machining system comprising:
a dental tool machine (1) which comprises:
one or more carriage units (3) each movably holding at least one dental tool (4) for machining a corresponding side of the dental block (2);
a holding unit for holding at least one dental block (2) relatively movably with respect to the dental tools (4);
**characterized by** further comprising:
a control unit having a computer-program adapted to individually control drive of the carriage units (3) and the holding unit according to the method defined in any one of claims 1 to 7.

## Patentansprüche

1. Computerimplementiertes Verfahren zur Bearbeitung eines Zahnblocks (2) unter Verwendung mindestens eines Zahnwerkzeugs (4), um einen Zahnersatz (5) mindestens vollständig entlang des Äquators (5a) fertigzustellen oder vorzufertigen, mit oder ohne Haltestutzen (5b), wobei das Verfahren umfasst:
einen Schritt des Bewegens der Achse (4a) des Zahnwerkzeugs (4) entlang eines Pfades (6) mit einer überlagerten seitlichen Bewegung, die eine Amplitude (A) aufweist, und ohne ein unbearbeitetes Stück (2') von dem Rest des Zahnblocks (2) zu trennen, wobei der Pfad (6) vom Äquator (5a) mindestens um einen Betrag entfernt liegt, der gleich der Hälfte des Durchmessers des Zahnwerkzeugs (4) plus der Hälfte der Amplitude (A) der überlagerten seitlichen Bewegung ist, wobei die Amplitude (A) der überlagerten seitlichen Bewegung entlang des Pfades (6) variiert wird, wobei der Pfad (6) eine trochoidale Form aufweist.

2. Verfahren nach Anspruch 1, **dadurch gekennzeichnet, dass** das Zahnwerkzeug (4) höchstens eine Umdrehung um den Äquator (5a) bewegt wird, um den Zahnersatz (5) mindestens vollständig entlang des Äquators (5a) fertigzustellen oder vorzufertigen, mit oder ohne Haltestutzen (5b).

3. Verfahren nach Anspruch 1, **dadurch gekennzeichnet, dass** das Zahnwerkzeug (4) mehr als eine Umdrehung um den Äquator (5a) bewegt wird, um den Zahnersatz (5) mindestens vollständig entlang des Äquators (5a) fertigzustellen oder vorzufertigen, mit oder ohne Haltestutzen (5b).

4. Verfahren nach einem der Ansprüche 1 bis 3, **dadurch gekennzeichnet, dass** zwei Zahnwerkzeuge (4) zur Bearbeitung des Zahnblocks (2) verwendet werden, wobei die Achsen (4a) der beiden Zahnwerkzeuge (4) parallel in entgegengesetzter Richtung (z) ausgerichtet sind und entweder gleichzeitig oder nacheinander entlang der entsprechenden Pfade (6) bewegt werden, um den Zahnersatz (5) mindestens vollständig entlang des Äquators (5a) fertigzustellen oder vorzufertigen, mit oder ohne Haltestutzen (5b).

5. Verfahren nach einem der Ansprüche 1 bis 4, **dadurch gekennzeichnet, dass** die Seitenfläche mindestens eines Zahnwerkzeugs (4) zur Bearbeitung des Zahnblocks (2) verwendet wird, wobei die Achse (4a) des Zahnwerkzeugs (4) durch den gesamten Zahnblock (2) oder nur in einen Teil des Zahnblocks (2) eindringt.

6. Verfahren nach einem der Ansprüche 1 bis 5, **dadurch gekennzeichnet, dass** jedes Zahnwerkzeug (4) ein zylindrisch geformtes Werkzeug mit oder ohne Eckenradius, ein sphärisch geformtes Werkzeug, ein torisch geformtes Werkzeug, ein konisch geformtes Werkzeug, ein Fräswerkzeug mit definierten Schneidkanten oder ein Schleifwerkzeug mit undefinierten Schneidkanten oder ein Werkzeug mit einer kombinierten Form aus einem oder mehreren der vorgenannten Werkzeuge ist.

7. Verfahren nach einem der Ansprüche 1 bis 6, **dadurch gekennzeichnet, dass** der Zahnblock (2) aus einem Material hergestellt ist, das Keramik, vorgesinterte Keramik, Metall, vorgesintertes Metall, Kunststoff und/oder einen Verbundwerkstoff umfasst.

8. Computerprogramm, umfassend computerlesbare Codes, um ein computergestütztes Dentalbearbeitungssystem (1) zu veranlassen, die Verfahrensschritte nach einem der Ansprüche 1 bis 7 auszuführen.

9. Computerlesbarer Speicher, der das Computerprogramm nach Anspruch 8 speichert.

10. Zahnbearbeitungssystem, umfassend:
eine Zahnwerkzeugmaschine (1), die umfasst:
eine oder mehrere Schlitteneinheiten (3), die jeweils mindestens ein Zahnwerkzeug (4) zum Bearbeiten einer entsprechenden Seite des Zahnblocks (2) beweglich halten;
eine Halteeinheit zum Halten mindestens eines Zahnblocks (2), der relativ zu den Zahnwerkzeugen (4) beweglich ist;
**dadurch gekennzeichnet, dass** es ferner umfasst:
eine Steuereinheit, die ein Computerprogramm aufweist, das angepasst ist, um den Antrieb der Schlitteneinheiten (3) und der Halteeinheit gemäß dem in einem der Ansprüche 1 bis 7 definierten Verfahren individuell zu steuern.

## Revendications

1. Procédé mis en oeuvre par ordinateur d'usinage d'un bloc dentaire (2) à l'aide d'au moins un outil dentaire (4) pour finir ou pré-finir une restauration dentaire (5) au moins complètement le long de l'équateur (5a), avec ou sans embout de maintien (5b), le procédé comprenant :
une étape de déplacement de l'axe (4a) de l'outil dentaire (4) le long d'un trajet (6) avec un mouvement de superposition latéral ayant une amplitude (A), et sans séparer une pièce non usinée (2') du reste du bloc dentaire (2), le trajet (6) s'éloignant de l'équateur (5a) à hauteur d'au moins la moitié du diamètre de l'outil dentaire (4) plus la moitié de l'amplitude (A) du mouvement de superposition latéral, l'amplitude (A) du mouvement de superposition latéral étant modifiée le long du trajet (6), le trajet (6) présentant une forme trochoïdale.

2. Procédé selon la revendication 1, **caractérisé en ce que** l'outil dentaire (4) est déplacé d'au plus un tour autour de l'équateur (5a) pour finir ou pré-finir la restauration dentaire (5) au moins complètement le long de l'équateur (5a), avec ou sans embout de maintien (5b).

3. Procédé selon la revendication 1, **caractérisé en ce que** l'outil dentaire (4) est déplacé de plus d'un tour autour de l'équateur (5a) pour finir ou pré-finir la restauration dentaire (5) au moins complètement le long de l'équateur (5a), avec ou sans embout de maintien (5b).

4. Procédé selon l'une quelconque des revendications 1 à 3, **caractérisé en ce que** deux outils dentaires (4) sont utilisés pour usiner le bloc dentaire (2), les axes (4a) des deux outils dentaires (4) étant alignés parallèlement en sens inverse (z) et déplacés soit simultanément, soit consécutivement le long des trajets correspondants (6) pour finir ou pré-finir la restauration dentaire (5) au moins complètement le long de l'équateur (5a), avec ou sans embout de maintien (5b).

5. Procédé selon l'une quelconque des revendications 1 à 4, **caractérisé en ce que** la surface latérale d'au moins un outil dentaire (4) est utilisée pour usiner le bloc dentaire (2), l'axe (4a) de l'outil dentaire (4) pénétrant dans tout le bloc dentaire (2) ou seulement dans une partie du bloc dentaire (2).

6. Procédé selon l'une quelconque des revendications 1 à 5, **caractérisé en ce que** chaque outil dentaire (4) est un outil parmi un outil de forme cylindrique avec ou sans rayon de bec, un outil de forme sphérique, un outil de forme torique, un outil de forme conique, un outil de fraisage avec des arêtes de coupe définies, ou un outil de meulage avec des arêtes de coupe non définies ou un outil combinant une ou plusieurs formes des outils précédents.

7. Procédé selon l'une quelconque des revendications 1 à 6, **caractérisé en ce que** le bloc dentaire (2) est constitué d'un matériau comprenant de la céramique, de la céramique préfrittée, du métal, du métal préfritté, du plastique et/ou un composite.

8. Programme informatique comprenant des codes lisibles par ordinateur permettant d'amener un système d'usinage dentaire informatisé (1) à exécuter les étapes du procédé selon l'une quelconque des revendications 1 à 7.

9. Support de stockage lisible par ordinateur qui stocke le programme d'ordinateur selon la revendication 8.

10. Système d'usinage dentaire comprenant :
une machine-outil dentaire (1) qui comprend :
une ou plusieurs unités de chariot (3) portant chacune de manière mobile au moins un outil dentaire (4) pour usiner un côté correspondant du bloc dentaire (2) ;
une unité de maintien pour maintenir au moins un bloc dentaire (2) de manière relativement mobile par rapport aux outils dentaires (4) ;
**caractérisé en ce qu'**il comprend en outre :
une unité de commande ayant un programme d'ordinateur conçu pour commander individuellement l'entraînement des unités de chariot (3) et de l'unité de maintien selon le procédé défini dans l'une quelconque des revendications 1 à 7.
